# EUROPEAN PATENT APPLICATION

(11) **EP 1 536 342 A2**
(43) Date of publication of application: **01.06.2005**
(21) Application number: 04257127.3
(22) Date of filing: 17.11.2004
(51) Int. Cl.: G06F 13/16

(54) **Peripheral controller with shared EEPROM, containing executable code and configuration data**

(30) Priority: 25.11.2003 US 525230 P; 23.08.2004 US 924280
(71) Applicant: Agere System Inc., Allentown, PA 18109 (US)
(72) Inventor: Azadet, Kameran, Morganville, NJ 07751 (US); Livny, Isaac M., Manalapan, NJ 07726 (US); Mudichintala, Anil, Morganville, NJ 07751-1400 (US)
(74) Representative: Williams, David John

(57) **Abstract**

A peripheral controller is provided for controlling communications with one or more peripheral devices. The peripheral controller includes a controller for controlling one or more peripheral devices; and a single interface to a shared memory device that stores configuration information for at least one of the one or more peripheral devices and additional code, such as boot ROM code. The shared memory device may be, for example, an EEPROM or a serial flash memory device. The controller and shared memory device may optionally communicate using a serial bus to further reduce the pin count. A memory controller maps the user addresses into non-overlapping physical addresses within the shared memory device.

## Description

### Cross-Reference to Related Applications

The present application claims priority to United States Provisional Patent Application Serial Number 60/525,230, filed November 25, 2003, incorporated by reference herein.

### Field of the Invention

The present invention relates generally to computing devices and, more particularly, to methods and apparatus for controlling peripheral devices.

### Background of the Invention

Computing systems include a number of internal and external components and devices that must communicate and operate in compatible manner order to perform the functions of the computing device. A typical computing environment includes components and devices manufactured by various manufacturers. Increasingly, computing systems provide one or more controllers to control communications with a number of different peripheral devices.

Typically, a peripheral controller obtains data or software code from two distinct memories. In one common implementation, a first Electrically Erasable Programmable Read-Only Memory (EEPROM) stores Peripheral Component Interconnect (PCI) configuration information for each peripheral and a second EEPROM stores Boot ROM code that controls program execution until the operating system takes over. In addition, the peripheral controller typically communicates with the first EEPROM by means of a serial bus and the controller typically communicates with the second EEPROM by means of a parallel bus. The parallel bus for the second EEPROM increases the number of pins required, and thereby limits the achievable reduction in the size of the foot print of the peripheral controller.

While such a configuration allows the peripheral controller to effectively control communications with a number of different peripheral devices, the configuration is contrary to the growing trends toward reduced surface area and pin counts. A need therefore exists for a controller architecture that provides for a reduced surface area and pin count.

### Summary of the Invention

Generally, a peripheral controller is provided for controlling communications with one or more peripheral devices. The peripheral controller includes a controller for controlling one or more peripheral devices; and a single interface to a shared memory device that stores configuration information for at least one of the one or more peripheral devices and additional code, such as boot ROM code. The shared memory device may be, for example, an EEPROM or a serial flash memory device. The controller and shared memory device may optionally communicate using a serial bus to further reduce the pin count. A memory controller maps the user addresses into non-overlapping physical addresses within the shared memory device.

A more complete understanding of the present invention, as well as further features and advantages of the present invention, will be obtained by reference to the following detailed description and drawings.

### Brief Description of the Drawings

FIG. 1 is a schematic block diagram of a conventional peripheral controller;
FIG. 2 is a schematic block diagram illustrating an exemplary single chip controller of FIG. 1 in further detail;
FIG. 3 is a schematic block diagram of a peripheral controller incorporating features of the present invention;
FIGS. 4A and 4B illustrate the mapping of information into physical addresses in the EEPROMs in the conventional configuration of FIG. 1 and the configuration of the present invention in FIG. 3, respectively; and
FIG. 5 is a schematic block diagram illustrating an EEPROM controller circuit that maps the physical addresses for the shared EEPROM of FIG. 3.

### Detailed Description

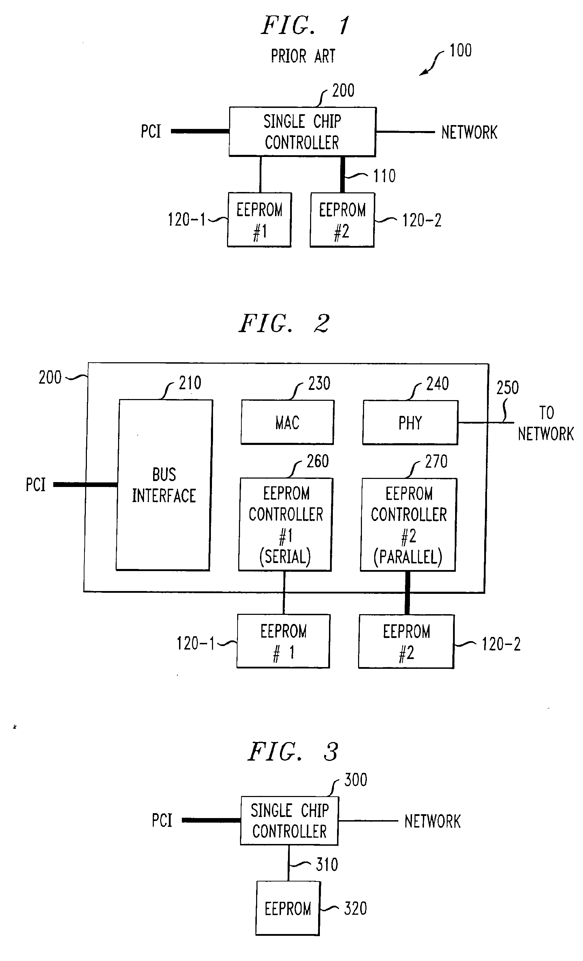

FIG. 1 is a schematic block diagram of a conventional peripheral controller 100. As shown in FIG. 1, and indicated above, the peripheral controller 100 typically includes a single chip controller 200, as discussed further below in conjunction with FIG. 2, and two EEPROMs 120-1 and 120-2. The single chip controller 200 may be embodied, for example, as a Gigabit Ethernet or USB controller device. The first EEPROM 120-1 stores Peripheral Component Interconnect (PCI) configuration information for each peripheral and the second EEPROM 120-2 stores Boot ROM code that controls program execution until the operating system takes over. In addition, the controller 200 typically communicates with the first EEPROM 120-1 by means of a serial bus and the controller 200 typically communicates with the second EEPROM 120-2 by means of a parallel bus 110. The parallel bus 110 for the second EEPROM 120-2 increases the number of pins required, and thereby limits the achievable reduction in the size of the foot print of the peripheral controller 100.

FIG. 2 is a schematic block diagram illustrating an exemplary single chip controller 200 of FIG. 1 in further detail. As shown in FIG. 2, the single chip controller 200 includes a bus interface 210, such as a PCI-Express interface in the exemplary embodiment. The bus interface 210 permits reading and writing from the main memory of a personal computer. In addition, the single chip controller 200 includes, for each supported peripheral connection, appropriate media access controller(s) (MACs) and PHY module(s) 230, 240 and a peripheral connector 250-n. The media access controller(s) 230 store and forward packets to and from a network, in a known manner. The media access controller(s) 230 require vendor specific information to communicate with each peripheral device. The vendor specific information may be obtained from the first EEPROM 120-1, for example, using a serial EEPROM Controller #1 260. A second parallel EEPROM Controller #1 260 controls communications with the second EEPROM 120-2.

The PHY module(s) 240 provide the electrical interface onto the network (or another connection, such as a USB or Firewire connection). It is noted that the peripheral devices that are connected to the connector(s) 250 would typically include their own MAC and PHY modules, as appropriate, in a known manner.

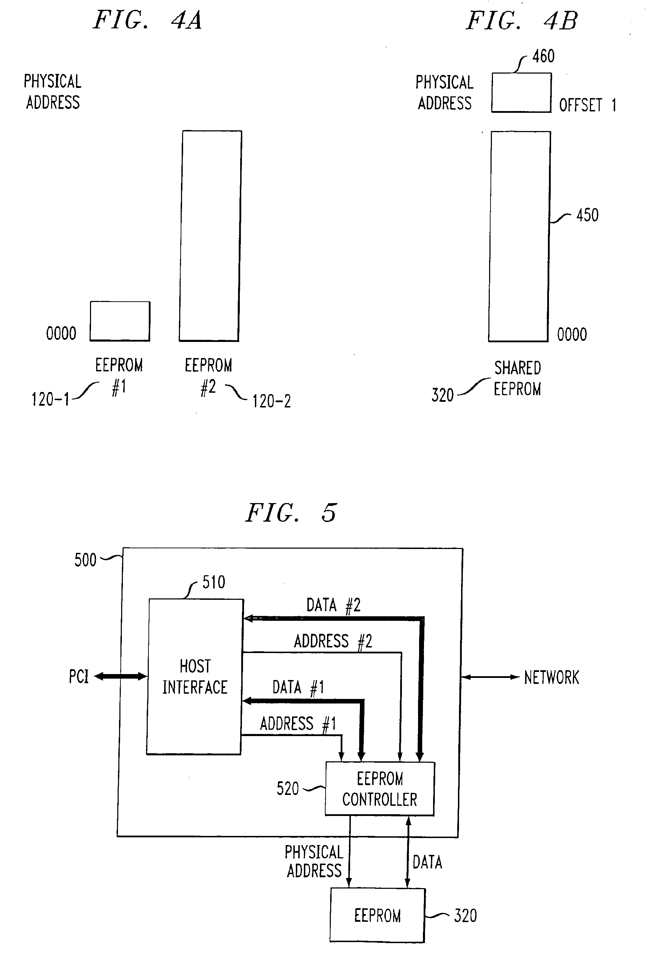

FIG. 3 is a schematic block diagram of a peripheral controller 300 incorporating features of the present invention. According to one aspect of the invention, the peripheral controller 300 communicates with a single EEPROM 320 that stores all non-volatile data needed by the peripheral controller 300. As discussed further below in conjunction with FIG. 4, the EEPROM 320 stores Peripheral Component Interconnect (PCI) configuration information in a first section, identified by a first memory offset, and stores Boot ROM code in a second section, identified by a first memory offset. In one preferred embodiment, the controller 200 communicates with the EEPROM 320 by means of a serial bus, such as a high speed serial interface, thereby further reducing the number of required pins.

FIGS. 4A and 4B illustrate the mapping of information into physical addresses in the EEPROMs in the conventional configuration of FIG. 1 and the configuration of the present invention in FIG. 3. As shown in FIG. 4A, each EEPROM 120-1 and 120-2 of the conventional configuration of FIG. 1 has a distinct memory space that are separately addressed beginning with a memory offset of 0000. As shown in FIG. 4B, the shared EEPROM 320 stores Peripheral Component Interconnect (PCI) configuration information in a first section 450 and Boot ROM code in a second section 460. The first section 450 is identified by a first memory offset of 0000, and the second section 460 is identified by a second memory offset, offset1. Thus, the Boot ROM stored in the second section 460 is accessed by employing the offset, offset1. As discussed hereinafter, the peripheral controller can provide the memory offset needed to access the Boot ROM code.

FIG. 5 is a schematic block diagram illustrating an EEPROM controller circuit 500 that maps the physical addresses for the shared EEPROM 320. As shown in FIG. 5, a host interface 510 makes requests to an EEPROM controller 520 to access information stored in the shared EEPROM 320. The EEPROM controller 520 maps user addresses from the host interface 510 into non-overlapping physical addresses within the shared EEPROM 320. For example, the host interface 510 might provide a request to the EEPROM controller 520 for configuration information stored in the first memory section 450, using addr#1, and the EEPROM controller 520 will provide the requested information to the host interface 510 on the data line, data#1. Similarly, the host interface 510 might provide a request to the EEPROM controller 520 for Boot ROM information stored in the second memory section 460, using addr#2, and the EEPROM controller 520 will provide the requested information to the host interface 510 on the data line, data#2. For information stored in the second memory section 460, the EEPROM controller 520 will translate the physical address request to the EEPROM 320 by an amount equal to offset1.

In a further configuration of the present invention, two distinct memories may still be employed but they share the same bus line. A master device would control the selection between the two memories, configured as slave devices, as would be apparent to a person of ordinary skill in the art.

When fabricating the integrated circuits incorporating the peripheral controller 300 and EEPROM associated with the present invention, a plurality of identical die are typically formed in a repeated pattern on a surface of the wafer. Each die includes a single chip controller device 300 described herein, and may include other structures or circuits. The individual die are cut or diced from the wafer, then packaged as an integrated circuit. One skilled in the art would know how to dice wafers and package die to produce integrated circuits. Integrated circuits so manufactured are considered part of this invention.

The memories described herein will configure associated processors to implement the methods, steps, and functions disclosed herein. The memories could be implemented as an electrical, magnetic or optical memory, or any combination of these or other types of storage devices. Moreover, the term "memory" should be construed broadly enough to encompass any information able to be read from or written to an address in the addressable space accessed by an associated processor. With this definition, information on a network is still within a memory because the associated processor can retrieve the information from the network.

It is to be understood that the embodiments and variations shown and described herein are merely illustrative of the principles of this invention and that various modifications may be implemented by those skilled in the art without departing from the scope and spirit of the invention.

## Claims

1. A peripheral controller, comprising:
a controller for controlling one or more peripheral devices; and
a single interface to a shared memory device that stores configuration information for said one or more peripheral devices and additional code.

2. The peripheral controller of claim 1, wherein said controller includes at least one media access controller for controlling at least one peripheral device, a bus interface and a physical layer that provides an interface to one or more networks.

3. The peripheral controller of claim 1, wherein said additional code is boot ROM code.

4. The peripheral controller of claim 1, wherein said shared memory device is an EEPROM or a serial flash memory device.

5. The peripheral controller of claim 1, wherein one or more of said configuration information and said additional code are stored at an offset memory location in said shared memory device.

6. The peripheral controller of claim 1, further comprising a memory controller that maps user addresses into non-overlapping physical addresses within said shared memory device.

7. The peripheral controller of claim 1, wherein said peripheral controller is embodied on an integrated circuit or a System on a Chip.

8. An integrated circuit, comprising:
a controller for controlling one or more peripheral devices; and
a single interface to a shared memory device that stores configuration information for said one or more peripheral devices and additional code.

9. The integrated circuit of claim 8, wherein one or more of said configuration information and said additional code are stored at an offset memory location in said shared memory device.

10. A method performed by an integrated device for communicating with one or more peripheral devices, comprising:
processing communications with one or more peripheral devices; and
accessing configuration information for at least one of said one or more peripheral devices and additional code from a shared memory device.
